# EUROPÄISCHE PATENTSCHRIFT

(11) **EP 2 824 478 B1**
(45) Veröffentlichungstag und Bekanntmachung des Hinweises auf die Patenterteilung: **06.05.2015**
(21) Anmeldenummer: 13176077.9
(22) Anmeldetag: 11.07.2013
(51) Int. Cl.: G01S 17/10

(54) **Optoelektronischer Sensor und Verfahren zur Erfassung und Abstandsbestimmung von Objekten in einem Überwachungsbereich**
Optoelectronic sensor and method for detecting and measuring the distance of objects in a monitored area
Capteur optoélectronique et procédé destiné à la détection d'objets et à la détermination de distance dans une zone de surveillance

(43) Veröffentlichungstag der Anmeldung: 14.01.2015
(73) Patentinhaber: SICK AG, 79183 Waldkirch (DE)
(72) Erfinder: Jachmann, Fabian, 10967 Berlin (DE); Franzreb, Simon, 79183 Waldkirch (DE)
(74) Vertreter: Hehl, Ulrich

(56) Entgegenhaltungen:
- EP-A1- 2 589 980
- EP-A2- 1 972 961
- DE-A1-102010 061 382

## Beschreibung

Die Erfindung betrifft einen optoelektronischen Sensor, insbesondere einen Laserscanner, und ein Verfahren zur Erfassung und Abstandsbestimmung von Objekten in einem Überwachungsbereich nach dem Oberbegriff von Anspruch 1 beziehungsweise 12.

Bei der Objekterfassung durch einen Laserscanner überstreicht ein von einer Laserlichtquelle erzeugter Lichtstrahl mit Hilfe einer beweglichen Ablenkeinheit periodisch einen Überwachungsbereich. Das Licht wird an Objekten in dem Überwachungsbereich remittiert und in dem Laserscanner ausgewertet. Aus der Winkelstellung der Ablenkeinheit wird auf die Winkellage des Objektes und aus der Lichtlaufzeit unter Verwendung der Lichtgeschwindigkeit zusätzlich auf die Entfernung des Objektes von dem Laserscanner geschlossen. Dabei sind zwei grundsätzliche Prinzipien bekannt, die Lichtlaufzeit zu bestimmen. Bei phasenbasierten Verfahren wird das Sendelicht moduliert und die Phasenverschiebung des empfangenen gegenüber dem gesendeten Licht ausgewertet. Bei pulsbasierten Verfahren misst der Laserscanner die Laufzeit, bis ein ausgesandter Lichtpuls wieder empfangen wird.

Mit den Winkel- und Entfernungsangaben ist der Ort eines Objektes in dem Überwachungsbereich in zweidimensionalen Polarkoordinaten erfasst. Die dritte Raumkoordinate kann durch eine Relativbewegung in Querrichtung ebenfalls erfasst werden, beispielsweise durch einen weiteren Bewegungsfreiheitsgrad der Ablenkeinheit in dem Laserscanner oder indem das Objekt relativ zu dem Laserscanner bewegt wird. So können auch dreidimensionale Konturen ausgemessen werden.

Neben solchen Messanwendungen werden Laserscanner auch in der Sicherheitstechnik zur Überwachung einer Gefahrenquelle eingesetzt, wie sie beispielsweise eine gefährliche Maschine darstellt. Ein derartiger Sicherheitslaserscanner ist aus der DE 43 40 756 A1 bekannt. Dabei wird ein Schutzfeld überwacht, das während des Betriebs der Maschine vom Bedienpersonal nicht betreten werden darf. Erkennt der Laserscanner einen unzulässigen Schutzfeldeingriff, etwa ein Bein einer Bedienperson, so löst er einen Nothalt der Maschine aus. Andere Eingriffe in das Schutzfeld, beispielsweise durch statische Maschinenteile, können vorab als zulässig eingelernt werden. Oft sind den Schutzfeldern Warnfelder vorgelagert, wo Eingriffe zunächst nur zu einer Warnung führen, um den Schutzfeldeingriff und damit die Absicherung noch rechtzeitig zu verhindern und so die Verfügbarkeit der Anlage zu erhöhen. Sicherheitslaserscanner arbeiten meist pulsbasiert.

In der Sicherheitstechnik eingesetzte Sensoren müssen besonders zuverlässig arbeiten und deshalb hohe Sicherheitsanforderungen erfüllen, beispielsweise die Norm EN13849 für Maschinensicherheit und die Gerätenorm EN61496 für berührungslos wirkende Schutzeinrichtungen (BWS). Zur Erfüllung dieser Sicherheitsnormen sind eine Reihe von Maßnahmen zu treffen, wie beispielsweise sichere elektronische Auswertung durch redundante, diversitäre Elektronik, Funktionsüberwachung oder speziell Überwachung der Verschmutzung optischer Bauteile, insbesondere einer Frontscheibe, und/oder Vorsehen von einzelnen Testzielen mit definierten Reflexionsgraden, die unter den entsprechenden Scanwinkeln erkannt werden müssen.

Sollen Laserscanner unter rauen Umgebungsbedingungen und insbesondere im Outdoorbereich eingesetzt werden, so muss mit einer Sichttrübung beispielsweise durch Regen, Schnee, Nebel oder Staub gerechnet werden. Die dadurch verminderte Sichtweite reduziert durch Streuverluste die energetische Reichweite des Laserscanners und dämpft das optische Messsignal. Je nach Vorgehen bei der Auswertung kann es sogar zu Fehlmessungen aufgrund einer Blendung durch das von der Lufttrübung verursachte Signal kommen. Das eigentliche Zielobjekt wird also nicht mehr erkannt, was sogar zu einem sicherheitskritischen Übersehen einer Schutzfeldverletzung führen kann, oder ein von einer Sichttrübung verursachtes Signal wird fälschlich als Objekt interpretiert. Abhängig von Art und Ausmaß der Sichttrübung sinkt die Reichweite, wird der Sensor unzuverlässig, oder eine Messung wird verhindert und der Sensor damit nicht mehr verfügbar.

Mit einfachen Auswertungsverfahren durch Vergleich des Empfangssignals mit einer Objektschwelle gelingt die Unterscheidung zwischen Sichttrübungen und Objekten nicht zuverlässig. Denn eine Sichttrübung im Nahbereich erreicht ohne Weiteres die Intensität eines weiter entfernten Objekts. Abhilfemaßnahmen wie das entfernungsabhängige Anpassen der Schwelle reichen nicht aus, derartige Verwechslungen auszuschließen.

Eine andere Klasse von Laserscannern, die auch als mehrechofähig bezeichnet werden, bewertet das Empfangssignal nicht mit einer Schwelle, sondern betrachtet die vollständige zeitabhängige Echokurve, die auf einen Sendepuls folgt. Dazu wird das Empfangssignal mit einem A/D-Wandler erfasst und der gespeicherte, vollständige Kurvenzug anschließend mit einem Mustererkennungsverfahren bewertet. Dieser Ansatz wird beispielsweise in der EP 2 182 378 A1 verfolgt. Dieses Vorgehen erfordert zumindest einen hohen Hardwareaufwand und löst zudem nicht alle bei Sichttrübungen auftretenden Probleme.

Neben den bereits genannten puls- und phasenbasierten Lichtlaufzeitbestimmungen sind auch sogenannte Pulsmittelungsverfahren bekannt. Ein entsprechender Laserscanner gemäß EP 2 469 296 A1 sendet eine Vielzahl von Einzelpulsen aus und sammelt die resultierenden Empfangspulse in einem Histogramm, das dann für die Bestimmung eines Empfangszeitpunkts statistisch ausgewertet wird. Dabei überstreicht der Abtaststrahl während des Zeitintervalls, in dem das Histogramm gefüllt wird, einen gewissen Winkelbereich, über den somit der entstehende Messwert örtlich mittelt. Durch die Mittelung wird ein besonders gutes Signal-Rausch-Verhältnis erreicht. Das Zeitintervall ist typischerweise sehr kurz, beispielsweise im Bereich einiger zehn Mikrosekunden, so dass sich ein sichttrübender Partikel wie ein Regentropfen praktisch nicht bewegt und als statisch betrachtet werden kann. Entsprechend wird der Regentropfen entweder selbst als Objekt detektiert, oder dessen Remission kann diejenige eines dahinter befindlichen Objekts verdecken. In beiden Fällen misst der Laserscanner nicht richtig.

In einem ähnlichen Laserscanner nach der WO 2012 084 298 A1 sind zusätzlich mehrere Histogrammspeicher vorgesehen, damit einzelne Empfangspulse überlappend zu Histogrammen beitragen und parallel ausgewertet werden können. Die Robustheit gegenüber Sichttrübungen erhöht diese Maßnahme aber nicht.

Ein Laserscanner gemäß EP 2 541 273 A1 nutzt zusätzlich ein Splitterelement im analogen Empfangspfad, um das Empfangssignal in ein höherfrequentes Objektsignal und ein niederfrequentes Sichttrübungssignal aufzuteilen, die dann separat ausgewertet werden. Das verbessert zwar die Auswertung erheblich. Wenn aber ein Regentropfen ein Objekt verdeckt, fehlt die Messinformation des verdeckten Objekts von Anfang an, und damit entsteht unabhängig von der Qualität der Auswertung ein Messfehler.

Es ist daher Aufgabe der Erfindung, das Messverhalten eines gattungsgemäßen Sensors mit einem Pulsmittelungsverfahren im Falle von Sichttrübungen zu verbessern.

Diese Aufgabe wird durch einen optoelektronischen Sensor und ein Verfahren zur Erfassung und Abstandsbestimmung von Objekten in einem Überwachungsbereich nach Anspruch 1 beziehungsweise 12 gelöst. Dabei geht die Erfindung von dem Grundgedanken aus, Histogramme über mehrere Perioden zu sammeln. Dazu ist eine Vielzahl von Histogrammspeichern für verschiedene aufzulösende Winkelstellungen vorgesehen, wobei dies funktional zu verstehen ist, d.h. physisch können die Histogrammspeicher einen größeren gemeinsamen Speicher bilden. Die Histogrammspeicher werden nicht wie im Stand der Technik in einem Zug aus aufeinanderfolgenden Empfangspulsen gefüllt, sondern erst nach und nach mit Unterbrechungen über die mehreren Perioden. Ist dann ein Histogramm nach mehreren Perioden gefüllt, wird daraus eine Lichtlaufzeit bestimmt. Aus den entsprechenden Objektabständen bei den diversen zu den Histogrammspeichern gehörigen Winkelstellungen entsteht dann wie bei einem herkömmlichen Laserscanner eine Abstandskontur der Objekte des Überwachungsbereichs. Dabei entspricht eine Periode in der Regel einer Umdrehung der Ablenkeinheit, es kann aber auch nur eine Teilumdrehung sein, etwa bei einem Polygonspiegelrad als Ablenkeinheit, wo das überwachte Winkelsegment je Umdrehung mehrfach abgetastet wird.

Die Erfindung hat den Vorteil, dass sichttrübende Hindernisse wie Regentropfen ausgemittelt werden und damit die Messung trotz der Sichttrübung möglich bleibt. Das liegt daran, dass ein sichttrübendes Hindernis üblicherweise nicht über mehrere Perioden am selben Ort verbleibt, so dass allenfalls einige der Histogrammwerte beeinträchtigt sind. Dadurch wird das an sich bekannte Pulsmittelungsverfahren geschickt durch eine Veränderung der Zuordnungen von Einzelpulsen und damit der statistischen Basis genutzt, das Signal-Rauschverhältnis unter Sichttrübungen praktisch ohne zusätzliche Herstellkosten weiter zu verbessern. Der Sensor wird auch unter gestörten Bedingungen einsetzbar, etwa in staubigen Umgebungen oder im Outdoor-Bereich.

Die Auswertungseinheit ist bevorzugt dafür ausgebildet, die Histogramme pro Periode jeweils anhand genau eines Empfangspulses zu ergänzen. Hierbei gibt es also eine direkte Entsprechung der Wiederholfrequenz der Einzellichtpulse und der Winkelauflösung des Sensors. Der Überwachungsbereich ist in aufzulösende Winkelstellungen aufgeteilt, denen jeweils sowohl ein Histogrammspeicher als auch die in dieser Winkelstellung ausgesandten Einzellichtpulse zugeordnet werden. Auf diese Weise wachsen die Histogramme mit jeder Periode um einen Wert an, und dieser eine Wert wird spezifisch nur einer festen Winkelstellung zugeordnet. Jeder Messwert ist damit eine Mittelung nur über die Zeit, nicht jedoch über den Winkel.

Die Auswertungseinheit ist in einer alternativen bevorzugten Ausführungsform dafür ausgebildet, die Histogramme pro Periode jeweils anhand mehrerer aufeinanderfolgender Empfangspulse zu ergänzen. Das führt zu einer auch winkelabhängigen Mittelung.

Die Empfangspulse können dabei bevorzugt selektiv nur in jeweils einem Histogrammspeicher berücksichtigt werden. Dann werden weniger Histogrammspeicher benötigt, und zwar um einen Faktor, welcher der Anzahl pro Periode ergänzter aufeinanderfolgender Empfangspulse entspricht. Dementsprechend sinkt um diesen Faktor auch die Winkelauflösung im Vergleich mit einer Ausführungsform, bei dem für jede Winkelstellung, in die ein Einzelpuls ausgesandt wird, ein eigener Histogrammspeicher vorhanden ist. Um den gleichen Faktor verbessert sich dafür die Ansprechzeit, denn die Histogramme werden wesentlich schneller gefüllt.

Auch die Winkelauflösung kann dabei erhalten bleiben, indem in einer bevorzugten alternativen Ausführungsform die Auswertungseinheit dafür ausgebildet ist, einen Empfangspuls für mehrere Histogramme in Histogrammspeichern zu benachbarten Winkelstellungen zu berücksichtigen. Die Histogramme werden dann überlappend gebildet, und jeder Empfangspuls trägt in einer Winkelnachbarschaft im Rahmen der Überlappung zu mehreren Histogrammen bei. Dann ergibt sich eine gewisse Redundanz der Messwertbasis und weiterhin eine winkelabhängige Mittelung, es wird dadurch aber erreicht, dass nach wesentlich weniger Perioden für jede Richtung, in die ein Einzelpuls ausgesandt wurde, ein Abstandswert bestimmt werden kann.

Die Auswertungseinheit ist bevorzugt dafür ausgebildet, die Histogrammspeicher in eine Mehrzahl von Gruppen einzuteilen und die in den Histogrammspeichern gesammelten Histogramme über eine entsprechende Mehrzahl von Perioden versetzt auszuwerten, indem in jeweils einer Periode Lichtlaufzeiten aus Histogrammen der Histogrammspeicher einer Gruppe bestimmt werden. Ohne eine versetzte Auswertung gibt es Phasen von mehreren Perioden, in denen die Histogramme nur gefüllt werden. In der Periode, in der die Histogramme dann vorliegen, müssen dann sehr schnell die Lichtlaufzeiten aus den Histogrammen bestimmt werden, damit in der darauffolgenden Periode neue Histogramme gebildet werden können. Das lässt sich durch Pufferspeicher verhindern, und in manchen noch zu beschreibenden Ausführungsformen werden die Histogramme gleitend gefüllt und ausgewertet, so dass eine versetzte Auswertung nicht immer sinnvoll ist. Wenn aber eine versetzte Auswertung möglich ist, hilft sie, die vorhandene Auswertungskapazität besser zu nutzen und im Ergebnis mit weniger leistungsfähigen, kostengünstigeren Bausteinen auszukommen.

Die Ablenkeinheit ist bevorzugt für eine Drehzahl von 10.000 Umdrehungen pro Minute oder mehr ausgebildet. Das ist eine weit höhere Drehzahl, als sie derzeit bei Laserscannern üblich ist, und kompensiert zum Teil die durch Histogrammbildung über mehrere Perioden verursachte Erhöhung der Ansprechzeiten. Hohe Drehzahlen sind besonders vorteilhaft bei Ausführungsformen, in denen die Histogramme nur langsam gefüllt werden, beispielsweise von nur einem Empfangspuls je Periode. In anderen Ausführungsformen, in denen pro Periode mehrere Empfangspulse zu einem Histogramm beitragen, bleibt die Erhöhung der Ansprechzeit von Anfang an geringer, so dass hier auch geringere Drehzahlen von 5.000 Umdrehungen oder weniger ausreichen. Selbstverständlich ist unabhängig von der Art, wie die Histogramme gefüllt werden, eine beliebige Drehzahl möglich, wenn die Auswirkungen auf die Ansprechzeit hingenommen werden.

Die Histogrammspeicher sind bevorzugt als FiFo-Speicher (First in First out) ausgebildet, so dass in dem Histogramm jeweils der neueste Empfangspuls ergänzt und der älteste Empfangspuls vergessen wird. Das geht nur, wenn die Histogrammwerte nicht direkt kumuliert werden, sondern erkennbar bleibt, welcher Beitrag von welchem Empfangspuls stammt. Nach einer initialen Einschwingphase stehen auf diese Weise in jeder Periode vollständige Histogramme zur Verfügung. Ähnlich einem gleitenden Mittelwert sind hier die Histogramme in aufeinanderfolgenden Perioden nicht unabhängig. Erst nach mehreren Perioden, wenn abhängig von der Länge der Histogramme und der Anzahl berücksichtigter Empfangspulse je Periode auch der älteste Empfangspuls durch einen neuen Empfangspuls verdrängt wurde, sind zwei solche Histogramme wieder unabhängig voneinander.

Die Auswertungseinheit ist bevorzugt dafür ausgebildet, die Werte der Histogrammspeicher periodisch abklingen zu lassen und für einen neu zu berücksichtigenden Empfangspuls zu erhöhen. Die zu den Histogrammen beitragenden Empfangspulse haben also eine Art Verfallszeit, etwa mit einer Zeitkonstanten bei exponentiellem Abklingen. Damit tragen die Empfangspulse mit einem höheren Gewicht bei, je kürzer sie zeitlich zurückliegen, wobei ein aktuell hinzugefügter Empfangspuls das höchste Gewicht hat. Ähnlich der Ausführungsform mit einem FiFo-Speicher stehen somit nach einer Einschwingzeit in jeder Periode aktuelle Histogramme zur Verfügung. Durch Einstellen der Zeitkonstanten wird festgelegt, über welchen Zeitraum diese Histogramme mitteln.

Die Auswertungseinheit ist bevorzugt dafür ausgebildet, Lichtlaufzeiten mit einer kürzeren Auswertungsperiode aus den Histogrammen zu bestimmen, als Zeit für das Sammeln eines vollständigen Histogramms benötigt wird, insbesondere einmal in jeder Periode. Damit werden die ständig aktualisierten Histogramme genutzt, um die Messwerte mit einer kürzeren Ansprechzeit neu zu bestimmen. Wie zuvor erläutert, sind diese Messwerte nur im Abstand mehrerer Perioden wieder unabhängig voneinander, nachdem eine Länge des Histogramms entsprechende Anzahl Empfangspulse im relevanten Winkelbereich erfasst wurde beziehungsweise ältere Empfangspulse durch das Abklingen nur noch vernachlässigbar groß sind. Dennoch repräsentiert jeder Messwert die richtige, aktuelle Messsituation.

Die Empfangspulse werden bevorzugt binarisiert in den Histogrammspeichern gesammelt. Die Amplitude der Empfangspulse ist also nur durch 1 Bit repräsentiert. Dadurch können auch die Speicherzellen der Histogrammspeicher klein bleiben, denn beispielsweise genügt 1 Byte, um 255 Empfangspulse zu erfassen. Die Binarisierung erfolgt vorzugsweise dadurch, dass der Empfangspuls zunächst analog in einem Begrenzungsverstärker auf einen Sättigungswert getrieben und anschließend mit einem Komparator 1-Bit-wertig digitalisiert wird.

Die Auswertungseinheit ist bevorzugt dafür ausgebildet, die in Abhängigkeit von Winkelstellungen bestimmten Objektabstände mit vordefinierten Schutzfeldern zu vergleichen, um einen Objekteingriff in ein Schutzfeld zu erkennen und daraufhin ein sicherheitsgerichtetes Absicherungssignal auszugeben. Die Objektkonturen sind durch die Lichtlaufzeitmessungen zweidimensional bestimmt. Entsprechend können Schutzfelder vorkonfiguriert oder auch dynamisch angepasst oder sogar generiert und mit den Objektkonturen verglichen werden. Ein Sensor, der Schutzfelder für mögliche sicherheitsgerichtete Abschaltungen auswertet, ist vorzugsweise auch insgesamt ein Sicherheitssensor im Sinne der einleitend genannten oder vergleichbarer einschlägiger Normen. Dazu ist beispielsweise ein sicherer Ausgang vorgesehen (OSSD, Output Signal Switching Device), über den das Absicherungssignal ausgegeben wird.

Das erfindungsgemäße Verfahren kann auf ähnliche Weise durch weitere Merkmale ausgestaltet werden und zeigt dabei ähnliche Vorteile. Derartige weitere Merkmale sind beispielhaft, aber nicht abschließend, in den sich an die unabhängigen Ansprüche anschließenden Unteransprüchen beschrieben.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Fig. 1: eine schematische Schnittdarstellung durch einen Laserscanner;
- Fig. 2: eine Blockdarstellung einer analogen Signalvorverarbeitung und einer digitalen Auswertung des Laserscanners gemäß Figur 1;
- Fig. 3: eine Darstellung der Signale in verschiedenen Verarbeitungsstufen der Vorverarbeitung und Auswertung gemäß Figur 2;
- Fig. 4a: eine Illustration der Zuordnung von Winkelbereichen und Histogrammspeichern;
- Fig. 4b: eine Illustration der Zuordnung von Winkelstellungen und Lichtpulsen;
- Fig. 5: eine Illustration einer 1:1-Zuordnung von Lichtpulsen zu Histogrammspeichern;
- Fig. 6: eine Illustration einer Mehrfachzuordnung von Lichtpulsen zu Histogrammspeichern; und
- Fig. 7: eine Illustration einer überlappenden Mehrfachzuordnung von Lichtpulsen zu Histogrammspeichern.

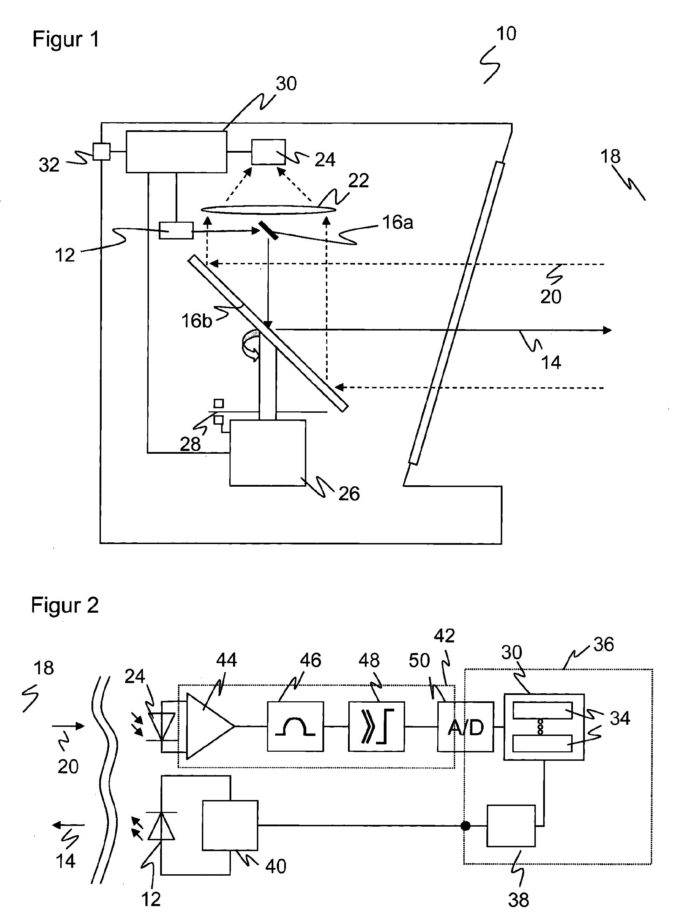

Figur 1 zeigt eine schematische Schnittdarstellung durch einen entfernungsmessenden Laserscanner 10. Ein von einem Lichtsender 12, beispielsweise einem Laser, erzeugter Lichtstrahl 14, der einzelne Lichtimpulse aufweist, wird über Lichtablenkeinheiten 16a-b in einen Überwachungsbereich 18 gelenkt und dort von einem gegebenenfalls vorhandenen Objekt remittiert. Das remittierte Licht 20 gelangt wieder zu dem Laserscanner 10 zurück und wird dort über die Ablenkeinheit 16b und mittels einer Empfangsoptik 22 von einem Lichtempfänger 24 detektiert, beispielsweise einer Photodiode.

Die Lichtablenkeinheit 16b ist in der Regel als Drehspiegel ausgestaltet, die durch Antrieb eines Motors 26 kontinuierlich rotiert. Die jeweilige Winkelstellung der Lichtablenkeinheit 16b wird über einen Encoder 28 erfasst. Der von dem Lichtsender 12 erzeugte Lichtstrahl 14 überstreicht somit den durch die Rotationsbewegung erzeugten Überwachungsbereich 18. Wird von dem Lichtempfänger 24 ein reflektiertes Lichtsignal 20 aus dem Überwachungsbereich 18 empfangen, so kann aus der Winkelstellung der Ablenkeinheit 16b mittels des Encoders 28 auf die Winkellage des Objektes in dem Überwachungsbereich 18 geschlossen werden.

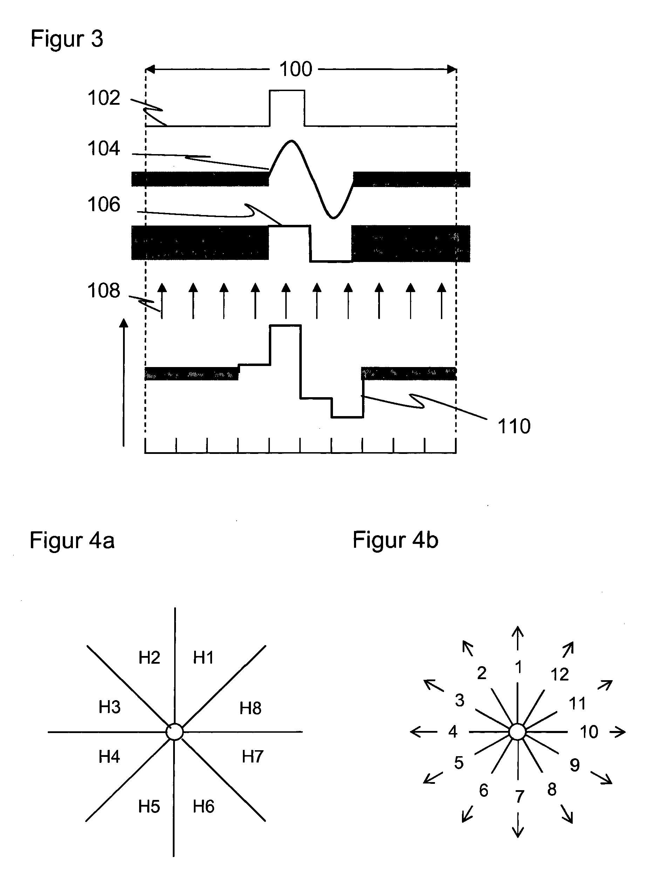

Zusätzlich wird in einem anhand der Figuren 2 und 3 noch genauer zu erläuternden Mehrpulsverfahren die Laufzeit der Laserlichtpulse von ihrem Aussenden bis zu dem Empfang nach Reflexion an dem Objekt in dem Überwachungsbereich 18 ermittelt. Aus der Lichtlaufzeit wird unter Verwendung der Lichtgeschwindigkeit auf die Entfernung des Objektes von dem Laserscanner 10 geschlossen. Diese Auswertung erfolgt in einer Auswerteeinheit 30, die dafür mit dem Lichtsender 12, dem Lichtempfänger 24, dem Motor 26 und dem Encoder 28 verbunden ist. Somit stehen über den Winkel und die Entfernung zweidimensionale Polarkoordinaten aller Objekte in dem Überwachungsbereich 18 zur Verfügung. Diese Daten können bereits die gesuchten Messdaten sein, die über einen Ausgang 32 verfügbar gemacht werden.

In sicherheitstechnischer Anwendung ist häufig das Ziel der Auswertung, Schutzfeldverletzungen zu erkennen. Dazu prüft die Auswertungseinheit 30, ob ein unzulässiges Objekt in innerhalb des Überwachungsbereichs 18 festgelegte Schutzfelder eingreift. Ist das der Fall, wird über den hier als Sicherheitsausgang ausgebildeten Ausgang 32 (OSSD, Output Signal Switching Device) ein Absicherungssignal an eine überwachte Gefahrenquelle, beispielsweise eine Maschine ausgegeben. Der Laserscanner 10 ist in derartigen sicherheitstechnischen Anwendungen durch Maßnahmen entsprechend der einleitend genannten Normen ein sicherer Laserscanner.

Die Bauform des Laserscanners 10 gemäß Figur ist beispielhaft zu verstehen. Es sind andere Aufbauten bekannt, beispielsweise mit einem Polygonspiegelrad oder einem als Ganzes einschließlich Lichtsender 12 und Lichtempfänger 24 rotierenden Messkopf anstelle der Ablenkeinheit 16, die von der Erfindung ebenso umfasst sind.

Die Laufzeitmessung erfolgt in einem Mehrpuls- beziehungsweise Pulsmittelungsverfahren, das nun anhand der Figuren 2 und 3 näher erläutert wird. Die Auswertungseinheit 30 ist mit mehreren Histogrammspeichern 34 auf einem digitalen Baustein 36 implementiert, beispielsweise einem FPGA (Field Programmable Gate Array). Auf einem Sendepfad veranlasst die Auswertungseinheit 30 über eine Verzögerungseinrichtung 38 und eine Lasertreiberschaltung 40 den Lichtsender 12 zum Aussenden von Einzellichtpulsen zu wohldefinierten Zeitpunkten. Die Verzögerungseinheit 38 kann durch Register, Zähler und dergleichen des FPGA realisiert sein.

Das remittierte Licht 20 eines Einzellichtpulses wird von dem Lichtempfänger 24 in einen Empfangspuls gewandelt und über einen analogen Vorverarbeiter 042 mit einem Vorverstärker 44, einem Filter 46 und einem Begrenzungsverstärker 48 sowie über einen A/D-Wandler 50 der Auswertungseinheit 30 zugeführt. Vorverstärker 44 und Filter 46 können auch vertauscht angeordnet sein.

Die dabei in den verschiedenen Zwischenstufen entstehenden Signale zeigt Figur 3. Der Lichtsender 12 erzeugt in jeder Messperiode 100 jeweils einen Einzellichtpuls, der die Bestimmung eines präzisen Zeitpunkts ermöglicht. Dafür eignet sich ein Rechteckpuls, es sind aber auch andere Pulse vorstellbar, wie beispielsweise Gausspulse. Der Einzellichtpuls wird in dem Überwachungsbereich 18 reflektiert oder remittiert und dann in dem Lichtempfänger 24 in einen elektrischen Empfangspuls 102 umgewandelt und in dem Transimpedanzverstärker 44 verstärkt. Der Empfangspuls 102 ist idealisiert dargestellt, unter realistischen Bedingungen kämen Rauschanteile und Formverzerrungen hinzu.

Der Empfangspuls 102 ist aufgrund der Natur des Lichtes immer ein unipolares Signal. In dem Filter 46, beispielsweise einem Bandpassfilter, wird daraus ein bipolares Signal 104, von dem nur die beiden ersten Schwingungen gezeigt sind. Neben dem eigentlichen bipolaren Signal 104 symbolisieren graue Rechtecke einen Rauschpegel. In dem Begrenzungsverstärker 48 wird das bipolare Signal 104 bis in die Sättigung hinein verstärkt und abgeschnitten, so dass das eigentliche Signal zu einer Rechteckflanke 106 und der durch graue Rechtecke dargestellte Rauschpegel in seiner Amplitude über den gesamten Dynamikbereich gedehnt wird.

Die Rechteckflanke 106 wird in dem insbesondere als Binarisierer ausgebildeten A/D-Wandler 50 abgetastet. Jeder Stützpunkt der Abtastung wird durch einen Pfeil 108 symbolisiert. Die entstehende Bitfolge wird in der Auswertungseinheit 30 verwendet, um ein Histogramm 110 zu bilden. Dafür ist für jedes Bin ein Akkumulator vorgesehen, der nur bei einem zugehörigen Bitwert "1" heraufgezählt wird. Bei idealen, unverrauschten Signalen würde in diesem Histogramm nur dasjenige Bin gefüllt, über dem die Rechteckflanke 106 liegt. Der von dem Begrenzungsverstärker 48 angehobene Rauschpegel füllt aber auch die übrigen Bins, und zwar wegen der Zufälligkeit des Rauschens im Erwartungswert etwa in jeder zweiten Messperiode 100.

Wird das soeben beschriebene Verfahren iteriert und das Histogramm 110 über n Messperioden 100 gebildet, so sind die Bins durch das Rauschen ungefähr mit dem Wert n/2 gefüllt, wobei statistische Schwankungen hinzukommen. Dieser Wert n/2 entspricht aufgrund der Binarisierung dem Signalwert Null. Daraus erhebt sich nach oben das durch den positiven Teil des bipolaren Signals 104 gebildete Maximum und nach unten das entsprechende Minimum heraus. Den dazwischenliegenden Nulldurchgang detektiert die Auswertungseinheit 30, um den Empfangszeitpunkt unabhängig von dem Signalpegel zu bestimmen. Figur 3 zeigt nur einen relevanten Ausschnitt der Messperiode 100 um den Empfangszeitpunkt herum. Um Speicher zu sparen, kann dieser Zeitbereich vorab gesucht und das Histogramm 110 nur für einen Teil der Messperiode 100 gebildet werden.

Während des Abtastens des Überwachungsbereichs 18 durch den Laserscanner 10 werden wie soeben erläutert Einzellichtpulse ausgesandt und die entstehenden Empfangspulse von der Auswertungseinheit 30 in einem Histogramm 110 gesammelt und ausgewertet. Durch die Drehbewegung der Ablenkeinheit 16 erhält jeder Einzellichtpuls einen eigenen Winkelversatz. Dadurch entstehen Freiheitsgrade, wie diese Einzelpulse zugeordnet werden, um ein Histogramm und damit einen Messwert für einen bestimmten Winkel zu bilden.

Dies ist in Figur 4 illustriert. Figur 4a zeigt eine Einteilung des dem Überwachungsbereich 18 entsprechenden 360°-Bereichs in Sektoren, denen jeweils ein Histogramm H1-H8 zugeordnet wird. Die Anzahl der Sektoren ist dabei rein beispielhaft. In der Praxis werden typischerweise erheblich mehr Sektoren gebildet, beispielsweise 360 oder 720 Sektoren für eine 1 °- beziehungsweise 0,5°-Auflösung, da die Breite eines Sektors die Winkelauflösung bestimmt. Außerdem kann auch der 360°-Bereich eingeschränkt sein, den der Laserscanner 10 abtastet, beispielsweise auf 270° oder einen beliebigen anderen Wert.

Figur 4b zeigt erneut eine Einteilung des 360°-Bereichs dieses Mal anhand von Einzellichtpulsen des ausgesandten Lichtstrahls 14 beziehungsweise den entsprechenden Empfangspulsen. Erneut ist die dargestellte Anzahl rein beispielhaft und für die Praxis zu klein, in realistischen Ausführungsformen werden die Einzellichtpulse in kleinen Schritten von 0,25°, 0,5°, 1°, 2° oder dergleichen ausgesandt. Die Anzahl von acht Histogrammen in Figur 4a einerseits und zwölf Lichtstrahlen 14 in Figur 4b andererseits ist absichtlich unterschiedlich gewählt, um zu unterstreichen, dass diese Anzahlen zunächst unabhängig voneinander sind.

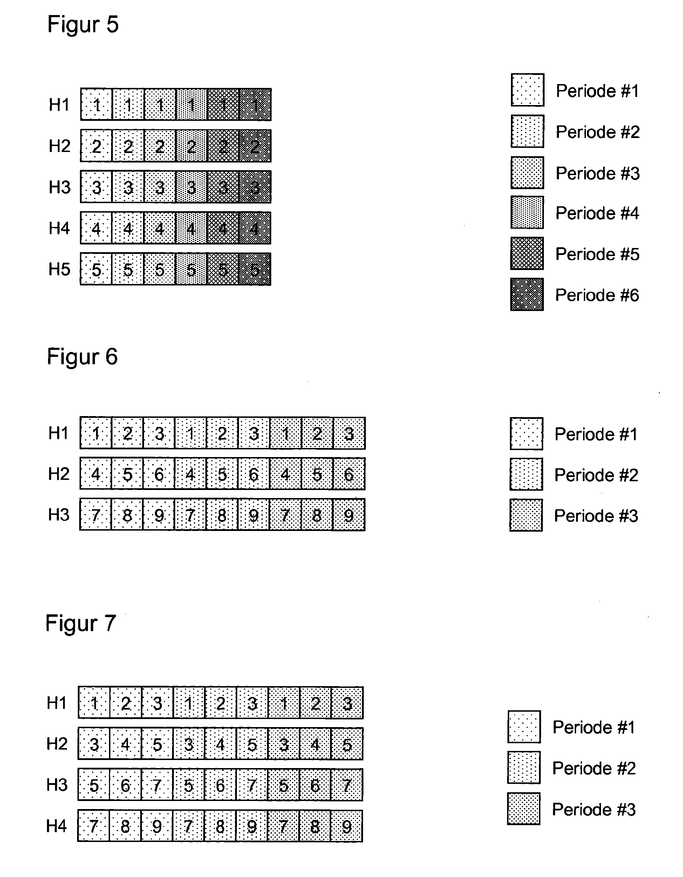

Konkrete Ausführungsformen der Zuordnung von Empfangspulsen zu Histogrammen werden nun anhand der Figuren 5 bis 7 vorgestellt. Dies sind nicht abschließende Beispiele, denn für die Umsetzung der Erfindung kommt es zunächst nicht auf die genaue Zuordnung an, sondern nur darauf, dass die Histogramme nicht auf einmal, sondern über mehrere Perioden der Drehbewegung der Ablenkeinheit 16 gesammelt werden.

Die Art der Darstellung ist in den Figuren 5 bis 7 gleich. Zeilenweise sind die unterschiedlichen Histogramme H1-HN und innerhalb der jeweiligen Zeile durch eine in die Zellen des Histogramms geschriebene Ziffer die den Histogrammen hinzugefügten Empfangspulse 1-M gezeigt. Dabei dürfen die Zellen nicht mit den Bins des Histogramms verwechselt werden: Jeder Empfangspuls modifiziert typischerweise zahlreiche oder alle Bins, die Zellen in den Figuren 5-7 dagegen zeigen nur die zeitliche Abfolge der hinzukommenden Empfangspulse. In Graustufen entsprechend der rechts gezeigten Legende sind die Perioden 1-L codiert. Alle Zahlen sind rein beispielhaft, um das Prinzip zu erläutern, und für die Praxis deutlich zu klein.

Figur 5 illustriert eine 1:1-Zuordnung, bei der in jeder Periode für jedes Histogramm und dessen zugehörigen Sektor ein Einzellichtpuls ausgesandt und dementsprechend genau ein Empfangspuls je Periode hinzugefügt wird. Das erste Histogramm H1 erhält also in jeder Periode 1-6 den ersten Empfangspuls, das zweite Histogramm H2 in jeder Periode den zweiten Empfangspuls und so fort. Die gewünschte Statistiktiefe, also Anzahl der Empfangspulse, aus denen ein auszuwertendes Histogramm zusammengesetzt sein soll, bestimmt in dieser Ausführungsform unmittelbar, nach wie vielen Perioden ein Abstandswert ausgewertet werden kann. Da jeder Empfangspuls direkt und eineindeutig einem Histogramm in einer festen Winkelstellung zugeordnet ist, mittelt das Histogramm nur über die Zeit, also die verstrichenen Perioden, nicht jedoch über den Ort beziehungsweise Winkel.

Figur 6 illustriert eine alternative Zuordnung, bei der jeweils in derselben Periode mehrere aufeinanderfolgende Empfangspulse demselben Histogramm hinzugefügt werden. Das erste Histogramm H1 erhält in diesem Beispiel die ersten drei Empfangspulse jeder Periode, das zweite Histogramm H2 den vierten bis sechsten Empfangspuls und so fort. Auf diese Weise werden die Histogramme schneller gefüllt, dafür sinkt die Winkelauflösung im Vergleich zu den Winkelschritten der Abtastung, und es erfolgt eine Mittelung über den Sektor des jeweiligen Histogramms. Diese Effekte können durch Wahl der Anzahl in einem Histogramm berücksichtigter aufeinanderfolgender Empfangspulse, die im Beispiel der Figur 6 drei beträgt, gegeneinander abgewogen werden.

Figur 7 illustriert eine Variation der Ausführungsform gemäß Figur 6. Auch hier werden in derselben Periode mehrere aufeinanderfolgende Empfangspulse demselben Histogramm hinzugefügt. Im Unterschied zu Figur 6 wird aber ein und derselbe Empfangspuls überlappend in den Histogrammen mehrerer benachbarter Sektoren berücksichtigt. Das erste Histogramm H1 erhält in diesem Beispiel in jeder Periode die ersten drei Empfangspulse, das zweite Histogramm H2 den dritten bis fünften Empfangspuls und so fort. Einige Empfangspulse, hier die ungeradzahligen, tragen zu zwei Histogrammen bei, und andere Empfangspulse, in diesem Beispiel die jeweils geradzahligen Empfangspulse, sind exklusiv einem einzigen Histogramm zugeordnet. Der Grad der Überlappung kann dabei ebenso von Figur 7 abweichend gewählt werden wie die Anzahl in einem Histogramm berücksichtigter aufeinanderfolgender Empfangspulse. Es ist auch denkbar, dass ein Empfangspuls zu mehr als zwei Histogrammen beiträgt. Figur 6 kann als Spezialfall mit Überlappungsgrad Null angesehen werden. Die überlappende Histogrammbildung führt dazu, dass die Histogramme ohne Beeinträchtigung der Winkelauflösung schneller gefüllt werden. Dafür ergibt sich eine gewisse Redundanz in der statistischen Basis, die Messwerte sind also örtlich nicht unabhängig voneinander, repräsentieren aber nichtsdestotrotz mit tatsächlichen Messdaten ihren jeweiligen Sektor.

In den Figuren 5 bis 7 werden Histogramme stets komplett neu aufgebaut. Alternativ ist denkbar, sich rollierend zu merken, aus welcher Periode ein Empfangspuls stammt, und in dem Histogramm jeweils nach Art eines FiFo-Speichers den ältesten Empfangspuls durch den aktuellen Empfangspuls zu ersetzen. Ein ähnlicher Gedanke ist, die Werte in den Bins des Histogramms beispielsweise exponentiell abklingen zu lassen und jeweils den aktuellen Empfangspuls hinzuzuaddieren. Das sind zwei Möglichkeiten, um in jeder Periode aktuelle Histogramme verfügbar zu haben, obwohl deren Datenbasis über mehrere Perioden mit Unterbrechungen gesammelt wurde.

Da die Histogramme ohnehin über mehrere Perioden gebildet werden, ist nicht zwingend erforderlich, dass die Auswertungseinheit 30 schnell genug ist, um in einer Periode alle Histogramme auszuwerten. Stattdessen ist eine versetzte Auswertung denkbar, bei der Gruppen gebildet und pro Periode nur die Histogramme einer Gruppe ausgewertet werden. Dabei ist auch denkbar, die Histogramme gruppenweise versetzt zu füllen, damit sie jeweils in der Periode zur Verfügung stehen, in der die Gruppe ausgewertet wird. Ein solcher Versatz bei der Histogrammbildung ist natürlich nicht in Ausführungsformen erforderlich, in denen die Histogramme ständig aktualisiert werden. Eine versetzte Auswertung ist dabei aber auch denkbar.

Erfindungsgemäß wird durch das Sammeln von Histogrammen über mehrere Perioden über einen längeren Zeitraum gemessen, um insbesondere Reflexe von Sichttrübungen wie Regentropfen oder Schneeflocken zu filtern. Dadurch wird sichergestellt, dass auch bei starker Regendichte allenfalls ein Teil der Messungen für ein Histogramm verfälscht ist. Solche Einzelsignale von Regentropfen haben dann nur noch geringen Einfluss, der durch das Mehrpulsverfahren ausgeglichen werden kann.

Neue, unabhängige Messwerte stehen dabei nicht mehr in jeder Periode zur Verfügung. Besonders ausgeprägt ist dieser Effekt bei einer Ausführungsform mit 1:1-Zuordnung von Empfangspulsen und Histogrammen gemäß Figur 5. Eine Möglichkeit, die Ansprechzeit zu verbessern, sind mäßig bis stark erhöhte Umdrehungszahlen der Ablenkeinheit 16 auf mindestens 10.000 Umdrehungen pro Minute. Beispielsweise steht bei 20.000 Umdrehungen pro Minute ein Histogramm, das über 30 Perioden aufgebaut wird, innerhalb von 90 ms zur Verfügung. Durch das Sammeln von Empfangspulsen über mehrere Perioden werden bei sonst gleichen Bedingungen weniger Einzellichtpulse ausgesandt als bei einer herkömmlichen Mittelung über mehrere aufeinanderfolgende Empfangspulse derselben Periode. Dadurch können wesentlich höhere Laserleistungen verwendet und damit das Signal-Rauschverhältnis weiter verbessert werden. Dieser Gewinn im Analograuschen kompensiert auch in gewissem Maße Verluste durch geringere Statistiktiefen, so dass die Anzahl der Perioden für das Sammeln eines Histogramms geringer gewählt werden kann als die Anzahl aufeinanderfolgender Empfangspulse in einem herkömmlichen Pulsmittelungsverfahren.

Da hohe Drehzahlen einen entsprechenden opto-mechanischen Aufwand erfordern, kann alternativ auch mit moderaten Drehzahlen beispielsweise von 5.000 Umdrehungen pro Minute gearbeitet werden. Dafür werden dann vorzugsweise wie in den Ausführungsformen gemäß Figur 6 und 7 mehrere Empfangspulse pro Periode zu den Histogrammen hinzugefügt. Sammelt man beispielsweise sieben Empfangspulse (3 Bit) pro Periode, so wird nach nur sieben Perioden ein Histogramm der Statistiktiefe 49 aufgebaut, so dass man auch bei geringeren Drehzahlen vergleichbar gute Messergebnisse in einer Ansprechzeit unterhalb von beispielsweise 90ms bleibt.

Je nach Implementierung werden die Empfangspulse direkt in den Histogrammen kumuliert, oder sie werden zwischengespeichert, beispielsweise um wie in einem FiFo-Speicher rollierend die ältesten Empfangspulse aus dem Histogramm entfernen zu können. Eine Abschätzung des Speicherbedarfs ergibt bei 275° Sichtbereich und Winkelschritten der ausgesandten Einzellichtpulse von 1/8° zunächst 2.200 Messpunkte pro Periode. Bei einer Histogrammbreite von 1.024 Bins benötigt jeder Empfangspuls 1.024 Bits, sofern die Amplitude wie zu den Figuren 2 und 3 erläutert mit 1 Bit codiert ist.

Im oben genannten ersten Beispiel einer 1:1-Zuordnung über 30 Perioden ergibt sich daraus ein Speicherbedarf von 30 Perioden x 1 Bit/Bin x 2.200 Messpunkte / Periode x 1.024 Bins / Messpunkt = 64,5 Mbit. Im zweiten Beispiel, in dem sieben Empfangspulse pro Periode zu einem Histogramm beitragen, wären es entsprechend 7 Perioden x 3 Bit / Bin x 2.200 Messpunkte / Periode x 1.024 Bins / Messpunkt = 45,1 MBit.

Die Histogramme können alternativ auch direkt mit den einlaufenden Empfangspulsen kumuliert werden, um diesen Speicherbedarf zu reduzieren. Dazu werden Empfangspulse in dem Histogramm sofort aufaddiert. Nach der erforderlichen Anzahl Perioden wird eine Lichtlaufzeit bestimmt, und alle Bins werden zurückgesetzt. Denkbar ist alternativ, die Bins nicht zurückzusetzen, sondern periodisch abklingen zu lassen. Dann steht immer ein aktuelles Histogramm zur Verfügung, das seine Vergangenheit exponentiell vergisst.

## Patentansprüche

1. Optoelektronischer Sensor (10), insbesondere Laserscanner, zur Erfassung und Abstandsbestimmung von Objekten in einem Überwachungsbereich (18), der einen Lichtsender (12) zum Aussenden eines Sendelichtstrahls (14) mit einer Vielzahl aufeinanderfolgender Einzellichtpulse, eine drehbare Ablenkeinheit (16) zur periodischen Ablenkung des Sendelichtstrahls (14) in den Überwachungsbereich (18), eine Winkelmesseinheit (28) zur Bestimmung einer Winkelstellung der Ablenkeinheit (16), einen Lichtempfänger (24) zum Erzeugen von Empfangspulsen aus dem von Objekten in dem Überwachungsbereich (18) remittierten oder reflektierten Sendelicht, eine Vielzahl von Histogrammspeichern (34) und eine Auswertungseinheit (30) aufweist, welche dafür ausgebildet ist, in den Histogrammspeichern (34) jeweils ein zeitliches Histogramm aus einer Vielzahl von Empfangspulsen zu sammeln und aus dem jeweiligen zeitlichen Histogramm die Lichtlaufzeit vom Sensor (10) zu einem Objekt und daraus den Objektabstand zu bestimmen,
**dadurch gekennzeichnet,**
**dass** die Vielzahl von Histogrammspeichern (34) jeweils einer Winkelstellung zugeordnet sind, und dass die Auswertungseinheit (30) dafür ausgebildet ist, in den Histogrammspeichern (34) nach und nach mit Unterbrechungen über mehrere Perioden der Umdrehungen der Ablenkeinheit (16) zeitliche Histogramme aus Empfangspulsen zu sammeln, die jeweils bei der dem Histogrammspeicher (34) zugeordneten Winkelstellung erfasst sind, und den Objektabstand für eine Winkelstellung aus dem jeweiligen zeitlichen Histogramm des zugeordneten Histogrammspeichers (34) zu bestimmen.

2. Sensor (10) nach Anspruch 1,
wobei die Auswertungseinheit (30) dafür ausgebildet ist, die Histogramme pro Periode jeweils anhand genau eines Empfangspulses zu ergänzen.

3. Sensor (10) nach Anspruch 1,
wobei die Auswertungseinheit (30) dafür ausgebildet ist, die Histogramme pro Periode jeweils anhand mehrerer aufeinanderfolgender Empfangspulse zu ergänzen.

4. Sensor (10) nach einem der vorhergehenden Ansprüche,
wobei die Auswertungseinheit (30) dafür ausgebildet ist, einen Empfangspuls für mehrere Histogramme in Histogrammspeichern (34) zu benachbarten Winkelstellungen zu berücksichtigen.

5. Sensor (10) nach einem der vorhergehenden Ansprüche,
wobei die Auswertungseinheit (30) dafür ausgebildet ist, die Histogrammspeicher (34) in eine Mehrzahl von Gruppen einzuteilen und die in den Histogrammspeichern (34) gesammelten Histogramme über eine entsprechende Mehrzahl von Perioden versetzt auszuwerten, indem in jeweils einer Periode Lichtlaufzeiten aus Histogrammen der Histogrammspeicher (34) einer Gruppe bestimmt werden.

6. Sensor (10) nach einem der vorhergehenden Ansprüche,
wobei die Ablenkeinheit (16) für eine Drehzahl von 10.000 Umdrehungen pro Minute oder mehr ausgebildet ist.

7. Sensor (10) nach einem der vorhergehenden Ansprüche,
wobei die Histogrammspeicher (34) als FiFo-Speicher ausgebildet sind, so dass in dem Histogramm jeweils der neueste Emfpangspuls ergänzt und der älteste Empfangspuls vergessen wird.

8. Sensor (10) nach einem der Ansprüche 1 bis 6,
wobei die Auswertungseinheit (30) dafür ausgebildet ist, die Werte der Histogrammspeicher (34) jeweils periodisch abklingen zu lassen und für einen neu zu berücksichtigenden Empfangspuls zu erhöhen.

9. Sensor (10) nach Anspruch 7 oder 8,
wobei die Auswertungseinheit (30) dafür ausgebildet ist, Lichtlaufzeiten mit einer kürzeren Auswertungsperiode aus den Histogrammen zu bestimmen, als Zeit für das Sammeln eines vollständigen Histogramms benötigt wird, insbesondere einmal in jeder Periode.

10. Sensor (10) nach einem der vorhergehenden Ansprüche,
wobei die Empfangspulse binarisiert in den Histogrammspeichern (34) gesammelt werden.

11. Sensor (10) nach einem der vorhergehenden Ansprüche,
wobei die Auswertungseinheit (30) dafür ausgebildet ist, die in Abhängigkeit von Winkelstellungen bestimmten Objektabstände mit vordefinierten Schutzfeldern zu vergleichen, um einen Objekteingriff in ein Schutzfeld zu erkennen und daraufhin ein sicherheitsgerichtetes Absicherungssignal auszugeben.

12. Verfahren zur Erfassung und Abstandsbestimmung von Objekten in einem Überwachungsbereich (18), bei dem ein Sendelichtstrahl (14) mit einer Vielzahl aufeinanderfolgender Einzellichtpulse ausgesandt wird und mit Hilfe einer drehbaren Ablenkeinheit (16), deren jeweilige Winkelstellung gemessen wird, den Überwachungsbereich (18) periodisch abtastet, Empfangspulse aus dem von Objekten in dem Überwachungsbereich (18) remittierten oder reflektierten Sendelicht erzeugt werden, in einer Viezahl von Histogrammspeichern (34) jeweils ein zeitliches Histogramm aus einer Vielzahl von Empfangspulsen gesammelt und aus dem jeweiligen zeitlichen Histogramm die Lichtlaufzeit vom Sensor (10) zu einem Objekt und daraus der Objektabstand bestimmt wird, **dadurch gekennzeichnet**,
in der Vielzahl von Histogrammspeichern (34), die jeweils einer Winkelstellung zugeordnet sind, nach und nach mit Unterbrechungen über mehrere Perioden der Umdrehungen der Ablenkeinheit (16) zeitliche Histogramme aus Empfangspulsen gesammelt werden, die jeweils bei der dem Histogrammspeicher (34) zugeordneten Winkelstellung erfasst sind, und der Objektabstand für eine Winkelstellung aus dem jeweiligen zeitlichen Histogramm des zugeordneten Histogrammspeichers (34) bestimmt wird.

13. Verfahren nach Anspruch 12,
wobei mehrere aufeinanderfolgende Empfangspulse in einem Histogramm erfasst werden.

14. Verfahren nach Anspruch 12 oder 13,
wobei die Histogramme gleitend erfasst und ausgewertet werden.

15. Verfahren nach einem der Ansprüche 12 bis 14,
wobei die in Abhängigkeit von Winkelstellungen bestimmten Objektabstände mit vordefinierten Schutzfeldern verglichen werden, um einen Objekteingriff in ein Schutzfeld zu erkennen und daraufhin ein sicherheitsgerichtetes Absicherungssignal auszugeben.

## Claims

1. An optoelectronic sensor (10), in particular a laser scanner, for the detection and distance determination of objects in a monitoring area (18), the sensor (10) comprising a light transmitter (12) for transmitting a transmission light beam (14) having a plurality of consecutive individual light pulses, a rotatable deflection unit (16) for a periodic deflection of the transmission light beam (14) in the monitoring area (18), an angle measuring unit (28) for determining an angular position of the deflection unit (16), a light receiver (24) for generating reception pulses from transmission light remitted or reflected by objects in the monitoring area (18), a plurality of histogram memories (34), and an evaluation unit (30) which is configured to accumulate a respective time histogram from a plurality of reception pulses in the histogram memories (34) and to determine, from the respective time histogram, a light time of flight from the sensor (10) to an object and therefrom an object distance,
**characterized in that** the plurality of histogram memories (34) are each associated with an angular position, and **in that** the evaluation unit (30) is configured to accumulate time histograms in the histogram memories (34) by and by and intermittently across several periods of the rotations of the deflection unit (16) from reception pulses which are each detected at the angular position associated with the respective histogram memory (34), and to determine the object distance for an angular position from the respective time histogram of the associated histogram memory (34).

2. The sensor (10) according to claim 1,
wherein the evaluation unit (30) is configured to add one and only one reception pulse to the histograms per period of the rotational movement of the deflection unit (16).

3. The sensor (10) according to claim 1,
wherein the evaluation unit (30) is configured to add several consecutive reception pulses to the histograms per period of the rotational movement of the deflection unit (16).

4. The sensor (10) according to any of the preceding claims,
wherein the evaluation unit (30) is configured to add a reception pulse to several histograms in histogram memories (34) associated with adjacent angular positions.

5. The sensor (10) according to any of the preceding claims,
wherein the evaluation unit (30) is configured to divide the histogram memories (34) into a plurality of groups and to evaluate the histograms accumulated in the histogram memories (34) in a staggered manner over a corresponding number of periods of the rotational movement of the deflection unit (16) by determining the light time of flight from histograms of histogram memories (34) of one group in one period.

6. The sensor (10) according to any of the preceding claims,
wherein the deflection unit (16) has a rotational speed of at least 10,000 revolutions per minute.

7. The sensor (10) according to any of the preceding claims,
wherein the histogram memories (34) are FIFO memories so that when the most recent reception pulse is added the oldest reception pulse is deleted.

8. The sensor (10) according to any of claims 1 to 6,
wherein the evaluation unit (30) is configured to periodically let the values in the histogram memories (34) fade and to increase the values for a new reception pulse to be added.

9. The sensor (10) according to claim 7 or 8,
wherein the evaluation unit (30) is configured to determine a light time of flight from the histograms with an evaluation period shorter than the period required to accumulate a complete histogram, in particular once per period.

10. The sensor (10) according to any of the preceding claims,
wherein the reception pulses are accumulated in the histograms following a binarization.

11. The sensor (10) according to any of the preceding claims,
wherein the evaluation unit (30) is configured to compare the object distances determined in dependence on angular positions with predefined protection zones in order to detect an object intrusion into a protection zone and to then output a safety-related shutdown signal.

12. A method for the detection and distance determination of objects in a monitoring area (18), wherein a transmission light beam (14) having a plurality of consecutive individual light pulses is transmitted and periodically scans the monitoring area (18) by means of a rotatable deflection unit (16) whose respective angular position is measured, reception pulses are generated from transmission light remitted or reflected by objects in the monitoring area (18), a respective time histogram is accumulated from a plurality of reception pulses in a plurality of histogram memories (34), and a light time of flight to an object and therefrom an object distance is determined from the respective time histogram, **characterized in that** in the plurality of histogram memories (34), each associated with an angular position, time histograms are accumulated in the histogram memories (34) by and by and intermittently across several periods of the rotational movement of the deflection unit (16) from reception pulses which are each detected at the angular position associated with the respective histogram memory (34), and the object distance for an angular position is determined from the respective time histogram of the associated histogram memory (34).

13. The method according to claim 12,
wherein several consecutive reception pulses are added to a histogram.

14. The method according to claim 12 or 13,
wherein the histograms are accumulated and evaluated in a moving window.

15. The method according to any of claims 12 to 14,
wherein the object distances determined in dependence on angular positions are compared with predefined protection zones in order to detect an object intrusion into a protection zone and in that case a safety-related shutdown signal is output.

## Revendications

1. Capteur optoélectronique (10), en particulier scanner à laser, pour la détection et pour la détermination de distance d'objets dans une zone de surveillance (18), qui comprend un émetteur de lumière (12) pour émettre un rayon de lumière émise (14) avec une pluralité d'impulsions lumineuses individuelles successives, une unité de déflexion rotative (16) pour défléchir périodiquement le rayon de lumière émise (14) vers la zone de surveillance (18), une unité de mesure angulaire (28) pour déterminer une position angulaire de l'unité de déflexion (16), un récepteur de lumière (24) pour engendrer des impulsions reçues à partir de la lumière émise réémise ou réfléchie par des objets dans la zone de surveillance (18), une pluralité de mémoires d'histogrammes (34) et une unité d'évaluation (30), laquelle est réalisée pour collecter, à partir d'une pluralité d'impulsions reçues, un histogramme temporel respectif dans les mémoires d'histogrammes (34) et pour déterminer, à partir de l'histogramme temporel respectif, le temps de parcours de la lumière depuis le capteur (10) jusqu'à un objet et déterminer la distance à l'objet à partir de celui-ci,
**caractérisé en ce que**
la pluralité de mémoires d'histogrammes (34) sont respectivement associées à une position angulaire, et **en ce que** l'unité d'évaluation (30) est réalisée pour collecter peu à peu dans les mémoires d'histogrammes (34), avec des interruptions, sur plusieurs périodes des rotations de l'unité de déflexion (16), des histogrammes temporels à partir des impulsions reçues, lesquelles sont détectées respectivement à la position angulaire associée à la mémoire d'histogramme (34), et pour déterminer la distance à l'objet pour une position angulaire à partir de l'histogramme temporel respectif de la mémoire d'histogramme associée (34).

2. Capteur (10) selon la revendication 1,
dans lequel l'unité d'évaluation (30) est réalisée pour compléter les histogrammes à chaque période respectivement au moyen d'exactement une impulsion reçue.

3. Capteur (10) selon la revendication 1,
dans lequel l'unité d'évaluation (30) est réalisée pour compléter les histogrammes à chaque période au moyen de plusieurs impulsions reçues successives.

4. Capteur (10) selon l'une des revendications précédentes,
dans lequel l'unité d'évaluation (30) est réalisée pour tenir compte d'une impulsion reçue pour plusieurs histogrammes dans des mémoires d'histogrammes (34) associées à des positions angulaires voisines.

5. Capteur (10) selon l'une des revendications précédentes,
dans lequel l'unité d'évaluation (30) est réalisée pour organiser les mémoires d'histogrammes (34) en une pluralité de groupes et pour évaluer les histogrammes collectés dans les mémoires d'histogrammes (34) de manière décalée sur une pluralité correspondante de périodes, en ce que des temps de parcours de la lumière d'une période respective sont déterminés à partir des histogrammes des mémoires d'histogrammes (34) d'un groupe.

6. Capteur (10) selon l'une des revendications précédentes,
dans lequel l'unité de déflexion (16) est réalisée pour une vitesse de rotation de 10.000 tours par minute ou plus.

7. Capteur (10) selon l'une des revendications précédentes,
dans lequel les mémoires d'histogramme (34) sont réalisées comme des mémoires "FiFo" (premier entré/premier sorti), de sorte que l'impulsion reçue respectivement la plus récente est complétée dans l'histogramme et l'impulsion reçue la plus ancienne est oubliée.

8. Capteur (10) selon l'une des revendications 1 à 6,
dans lequel l'unité d'évaluation (30) est réalisée pour laisser respectivement périodiquement s'évanouir les valeurs des mémoires d'histogrammes (34) et les augmenter pour une nouvelle impulsion reçue à prendre en compte.

9. Capteur (10) selon la revendication 7 ou 8,
dans lequel l'unité d'évaluation (30) est réalisée pour déterminer des temps de parcours de la lumière à partir des histogrammes, avec une période d'évaluation plus courte que le temps nécessaire pour collecter un histogramme complet, en particulier une fois dans chaque période.

10. Capteur (10) selon l'une des revendications précédentes,
dans lequel les impulsions reçues sont collectées dans les mémoires d'histogrammes (34) sous forme binaire.

11. Capteur (10) selon l'une des revendications précédentes,
dans lequel l'unité d'évaluation (30) est réalisée pour comparer les distances à des objets, déterminées en fonction des positions angulaires, avec des champs de protection prédéfinis, afin de reconnaître une intervention d'un objet dans un champ de protection et délivrer suite à cela un signal de sécurisation à vocation de sécurité.

12. Procédé pour la détection et la détermination de distance d'objets dans une zone de surveillance (18), dans lequel un rayon de lumière émise (14) est émis avec une pluralité d'impulsions de lumière individuelles successives et balaye périodiquement la zone de surveillance (18) avec l'aide d'une unité de déflexion rotative (16) dont on mesure la position angulaire respective, des impulsions reçues sont engendrées à partir de la lumière émise réémise ou réfléchie par des objets dans la zone de surveillance (18), un histogramme temporel respectif est collecté dans une pluralité de mémoires d'histogrammes (34) à partir d'une pluralité d'impulsions reçues, et le temps de parcours de la lumière depuis le capteur (10) jusqu'à un objet est déterminé à partir de l'histogramme temporel respectif, et la distance à l'objet est déterminée à partir de ce temps de parcours,
**caractérisé en ce que**
dans la pluralité de mémoires d'histogrammes (34), qui sont respectivement associées à une position angulaire, on collecte peu à peu, avec des interruptions, sur plusieurs périodes des rotations de l'unité de déflexion (16), des histogrammes temporels à partir d'impulsions reçues détectées respectivement à la position angulaire associée à la mémoire d'histogramme (34), et on détermine la distance à l'objet pour une position angulaire à partir de l'histogramme temporel respectif de la mémoire d'histogramme (34) associée.

13. Procédé selon la revendication 12,
dans lequel plusieurs impulsions reçues successives sont détectées dans un histogramme.

14. Procédé selon la revendication 12 ou 13,
dans lequel les histogrammes sont détectés et évalués de manière glissante.

15. Procédé selon l'une des revendications 12 à 14,
dans lequel les distances aux objets, déterminées en fonction des positions angulaires, sont comparées à des champs de protection prédéfinis, afin de reconnaître une intervention d'un objet dans un champ de protection, et délivrer suite à cela un signal de sécurisation à vocation de sécurité.
